# EUROPEAN PATENT SPECIFICATION

(11) **EP 4 172 525 B1**
(45) Date of publication and mention of the grant of the patent: **14.05.2025**
(21) Application number: 20751661.8
(22) Date of filing: 03.09.2020
(51) Int. Cl.: F16L 21/08, F16L 21/04, F16L 25/14

(54) **PIPE COUPLING AND RESTRAINING DEVICE**
ROHRVERBINDUNGS- UND HALTEVORRICHTUNG
DISPOSITIF DE RACCORD ET DE RETENUE DE TUYAU

(30) Priority: 30.06.2020 PT 2020116545
(43) Date of publication of application: 03.05.2023
(73) Proprietor: Fucoli-Somepal - Fundição de Ferro S. A, 3000-125 Coimbra (PT)
(72) Inventor: CRAVINHO SANTOS, Bruno Ricardo, 3000-125 Coimbra (PT); TEIXEIRA SILVA, Jorge Manuel, 4100-479 Porto (PT); ROCHA SOUSA, Paulo Roberto, 4560-765 Santa Marta, Penafiel (PT); CAETANO BAPTISTA, António José, 4465-103 S. Mamede Infesta (PT)
(74) Representative: Patentree
(86) International application number: PCT/IB2020/056202
(87) International publication number: WO 2022/023785

(56) References cited:
- EP-A2- 2 090 815
- WO-A1-2007/055576
- WO-A1-2013/041491
- WO-A2-2010/114366
- ES-U- 1 058 780
- GB-A- 2 363 437
- GB-A- 2 474 899

## Description

### Technical field

The present device belongs to the field of establishing restrained pipe connections using pipe coupling and restraining devices.

The present subject matter discloses a pipe coupling and restraining device that may be used for establishing longitudinally restrained pipe connections of multi-diameter and/or multiple materials pipes while allowing for axial misalignments between both ends of the device.

### Background

There are documents disclosing devices whose purpose is establishing longitudinal pipe connections. However, these devices are only suitable for mono-diameter and/or mono-material pipe connections. Others establish non-restrained (axially) pipe connections, creating sealed-only connections of externally restrained pipes. In addition, some devices are not tolerant to axial misalignments between pipes at both ends. For example, documents PH12018501661, ZA201800735 present devices for coupling pipes of the same diameter at both ends without the possibility of coupling pipes within a range of diameters, nor the occurrence of axial misalignment between pipes at both ends. Document CA3040835 describes a device for establishing connections between single-diameter and steel-only pipes. Document KR20190021951 presents a device for creating non-restrained longitudinal connections between pipes.

Document WO2007/05576 discloses a further pipe coupling and restraining device for connecting to a pipe.

These facts are disclosed in order to illustrate the technical problem addressed by the present disclosure.

### General Description

The present invention is defined by the appended independent claim. Advantageous features are defined in the dependent claims.

In general, the present disclosure relates to a pipe coupling and restraining device for connecting to a pipe wherein restraining and sealing are ensured, the installation of which being simpler and easier to perform.

The present document discloses a pipe coupling and restraining device for:
coupling pipes carrying fluids or sewage without leaking the material confined within the pipe walls, and the coupling without slipping of the pipes relatively to the coupling;
coupling multi-material pipes of a certain diameter within a range of diameters, not necessarily of the same diameter at both ends.

The pipe coupling and restraining device can be a gate valve, a "T" socket, a socket bend, or a fixation flange, among others. The pipe coupling is preferably made of cast iron. The pipe coupling contains two axial ends, one of them is turned to the device to be coupled to the pipe and the other end is turned to the pipe to be coupled.

It is disclosed a coupling and restraining device for connecting to a pipe, comprising:
a coupling sleeve for receiving an end of the pipe to be restrained and having a first annular abutment surface;
a clamping ring having a second annular abutment surface;
a restraining and sealing collar assembly comprising:
   a pipe collar formed by wedge-shaped segments comprising a support body and a gripper arranged to be placed between the pipe and the support body, and
   an annular seal for sealing the sleeve to the pipe;
   optionally, one or two rivets for restraining the pipe, embedded in the gripper;
   wherein the gripper is slidably coupled to the support body;
a plurality of fastening bolts for axially compressing the sleeve and clamping ring.

It is disclosed a coupling and restraining device such that when the sleeve and clamping ring are axially compressed together, the collar assembly is pressed radially and axially, inwards into the pipe, such that the seal is compressed:
radially between the collar assembly and the pipe, and
axially between the collar assembly and the first annular abutment surface.

It is disclosed a pipe coupling and restraining device for connecting to a pipe, said pipe defining a longitudinal axis, comprising:
a coupling sleeve for receiving an end of the pipe to be restrained and having a first annular abutment surface;
a clamping ring having a second annular abutment surface;
a collar assembly for restraining and sealing the pipe, comprising:
   a pipe collar formed by wedge-shaped segments, each segment comprising a support body and a gripper arranged between the pipe and the support body, and an annular seal for sealing the coupling sleeve to the pipe;
   wherein the gripper is slidably coupled to the support body for sliding forwardly and radially into the pipe for restraining the pipe when the pipe is pulled from the device;
   wherein the support body and gripper are both arranged to support the annular seal for sealing against the first annular abutment surface;
   wherein the annular seal is arranged to extend from the first annular abutment surface to the gap between grippers and pipe;
   wherein the first and/or the second annular abutment surfaces is conical such that when the coupling sleeve and clamping are axially compressed together, the collar assembly is pressed inwardly into the pipe compressing the seal radially between collar assembly and the pipe and also axially between the collar assembly and the first annular abutment surface.

The wedge-shaped segment comprises interdigitated fingers on a face of the support body for meshing with corresponding interdigitated fingers of two neighbouring wedge-shaped segments in order to support the annular seal as a circumferentially uninterrupted surface, as if the wedge-shaped segments formed a contiguous annular surface around the pipe to support the annular seal without full longitudinal interruptions of such support.

In particular, said fingers have slack interdigitating with the fingers of the adjacent segment such that adjacent segments may oscillate between each other while the fingers are still interdigitated to accommodate a pipe imperfection or misalignment.

In an embodiment, the sleeve and clamping ring comprise bolt fixation tabs for tightening the sleeve and clamping ring against each other.

In an embodiment, the first and second annular abutment surfaces are arranged to be facing against each other in an axial direction such that the first and second annular abutment surfaces engage, when tightened one against the other, to compress the collar assembly against the pipe and against the second annular abutment surface.

The disclosed support body and gripper are both arranged to support the seal against the first annular abutment surface.

In an embodiment, the seal comprises an annular lip for fitting into the gripper.

The gripper may comprise snap-fit clips that allow a slidably coupling of the gripper to the support body.

The support body may comprise a track arranged for receiving the gripper in sliding motion and the gripper may comprise clips arranged for slidably coupling to the track.

The disclosed track may comprise ribs arranged to limit the sliding motion of the gripper.

The disclosed support body may comprise a mid-body extension and a matching slot for receiving such a mid-body extension and a matching slot for receiving such a mid-body extension, on its opposite side, for guiding each support body with the next, when forming the pipe collar.

The disclosed support body may comprise snap-fit clips and respective slot for coupling to other support bodies when forming the pipe collar assembly.

The disclosed gripper comprises a surface for providing continuous and dynamic compression on the annular seal, according to the position of the gripper.

The disclosed gripper may comprise a straight knurled face for gripping with the pipe.

The seal may be a polymeric sealing gasket.

The rivet may be straight knurled.

The gripper may be knurled allowing such that its knurling ridges or ribs are angled against the removal of the pipe from the device.

The disclosed pipe coupling and restraining device allows for a small rotation of the collar assembly between the clamping ring and the sleeve such that small pipe misalignments can be tolerated while maintaining adequate grip and sealing. The collar assembly is able to adjust to said misalignment by sliding along the abutment surfaces of the clamping ring and of the annular sleeve.

In an embodiment, the clamping ring and sleeve are arranged to receive fastening bolts, optionally with matching nuts, for fastening the clamping ring against the sleeve wherein said bolts are circumferentially arranged around and on the clamping ring. Preferably the clamping ring and sleeve are arranged to receive nuts and bolts for fastening the clamping ring axially towards the sleeve wherein said bolts are circumferentially distributed.

The disclosed pipe coupling and restraining device allows for the fasteners to be supplied independently of the coupling such that eroded fasteners can be fully and easily replaced, not requiring machining or rethreading of the pipe coupling. In an embodiment, the clamping ring and the sleeve comprise perforated tabs arranged for receiving said nuts and bolts.

In an embodiment, the clamping ring comprises as many tabs as considered necessary, radially distributed along the clamping ring, and each of the tabs being coplanar with the contiguous tab on the sleeve, for receiving said nuts and bolts. Preferably four or more bolts.

The disclosed bolt fixation tabs comprise blocking protuberances for preventing bolt or nut rotation in order to facilitate the tightening of said nuts and bolts. The bolt blocking protuberances are protruding ribs in said one or more tabs.

In an embodiment, the sleeve is of cast iron, in particular ductile cast iron. In an embodiment, the clamping ring is of cast iron, in particular ductile cast iron.

In an embodiment, the wedge-shaped elements and the gripper are of polymeric material, in particular polyoxymethylene (POM).

In an embodiment, the annular seal is grooved on the face that comes in contact with the pipe.

The pipe collar comprises wedge-shaped segments, which comprise a number of support bodies and grippers, as many as necessary, for adapting to the different diameters within the diameter range in consideration.

The support body may comprise extensions on both sides that overlap the neighbouring support bodies on their corresponding channels.

The gripper comprises extensions to radially compress the sealing ring against the pipe. The gripper extensions can be inserted into corresponding slots on the next gripper when forming the pipe collar.

In an embodiment, the annular seal is elastomeric, in particular polymeric, further in particular synthetic rubber, further in particular ethylene propylene diene monomer rubber, EPDM. The disclosed annular seal may comprise an annular lip to allow the fitting into the gripper.

In an embodiment, the nuts and bolts are of stainless steel.

In an embodiment, the rivets are made of stainless steel.

In an embodiment, the first and second annular abutment surfaces are angled and compatible with the wedge of the wedge-shaped elements and the annular seal, respectively.

In an embodiment, the nuts and bolts for radially compressing the collar assembly around the pipe.

In an embodiment, the pipe collar and the recess on the clamping ring for receiving the pipe collar have a conical shape such that an axial pipe traction effort results in a strengthening of the gripping of the rivet, on the pipe.

In an embodiment, the support body features a conical face along a wedge for better load distribution.

The gripper is able to slide along the support body and increase the compression force on the annular seal, and enhance gripping behaviour around the pipe.

In an embodiment, the gripper sliding motion increases the sealing behaviour of the device, around the pipe, as the annular sealing is stretched. In particular, when the gripper stretches the annular seal as the gripper slides onto the tube, detaching the annular seal from the first abutment surface, this serves to protect the annular seal corner between the first abutment surface and the pipe.

In an embodiment, the collar assembly comprises a pipe collar, formed by a number of wedge-shaped elements coupled to each other, and the annular seal.

In an embodiment, the pipe collar is attached to the annular seal, in particular the pipe collar segment grippers are attached to the annular seal, in order to prevent any subcomponent disassembly that might occur when setting or assembling the device on site.

It is also disclosed a gate valve, "T" socket, socket bend, or fixation flange comprising the coupling and restraining device of any of the previous claims.

### Brief Description of the Drawings

The following figures provide preferred embodiments for illustrating the description and should not be seen as limiting the scope of invention.
**Figure 1** illustrates an embodiment according to the present disclosure of a pipe coupling and restraining device.
**Figure 2** illustrates in cross-section an embodiment of a pipe coupling and restraining device.
**Figure 3** illustrates in perspective an embodiment of a pipe coupling and restraining device.
**Figure 4** illustrates a detail view of an embodiment of a pipe coupling and restraining device.
**Figure 5A** and **5B** illustrate an embodiment of the collar assembly of a pipe coupling and restraining device.
**Figure 6A** and **6B** illustrate different arrangements of the pipe collar of a pipe coupling and restraining device.
**Figure 7** illustrates an embodiment of the wedge-shaped segment of a pipe coupling and restraining device.
**Figure 8** illustrates a detail view of an embodiment of the wedge-shaped segment of a pipe coupling and restraining device.
**Figure 9** illustrates an arrangement of the gripper in the support of the wedge-shaped segment.
**Figure 10** illustrates an embodiment of the rivet or rivets embedded in a gripper in the support of the wedge-shaped segment.
**Figures 11A, 11B** and **11C** present different configurations to the rivet or rivets embedded in a gripper in the support of the wedge-shaped segment.
**Figure 12** presents possible wedge-shaped segments forming the pipe collar in different interlocking arrangements.
**Figure 13** illustrates wedge-shaped segments forming the pipe collar having the gripper in different displacement positions relative to the respective support.
**Figure 14** illustrates a detail view of an embodiment of the wedge-shaped segment of a pipe coupling and restraining device.
**Figure 15** illustrates a front view and perspective view of an embodiment of the wedge-shaped segment of a pipe coupling and restraining device.
**Figure 16** illustrates a detail view of an embodiment of the grippers and rivets of two wedge-shaped segments of a pipe coupling and restraining device.
**Figure 17** illustrates a detail view of an embodiment of the wedge-shaped segment of a pipe coupling and restraining device.
**Figure 18** illustrates a detail view of an embodiment of the wedge-shaped segment of a pipe coupling and restraining device.
**Figure 19** illustrates a detail view of an embodiment of the seal before a stretch.
**Figure 20** illustrates a detail view of an embodiment of the seal after a stretch.
**Figure 21** illustrates a detail view of an embodiment of the seal stretched with a recess.
**Figure 22** illustrates a detail view of an embodiment of of a pipe coupling and restraining device.

### Detailed Description

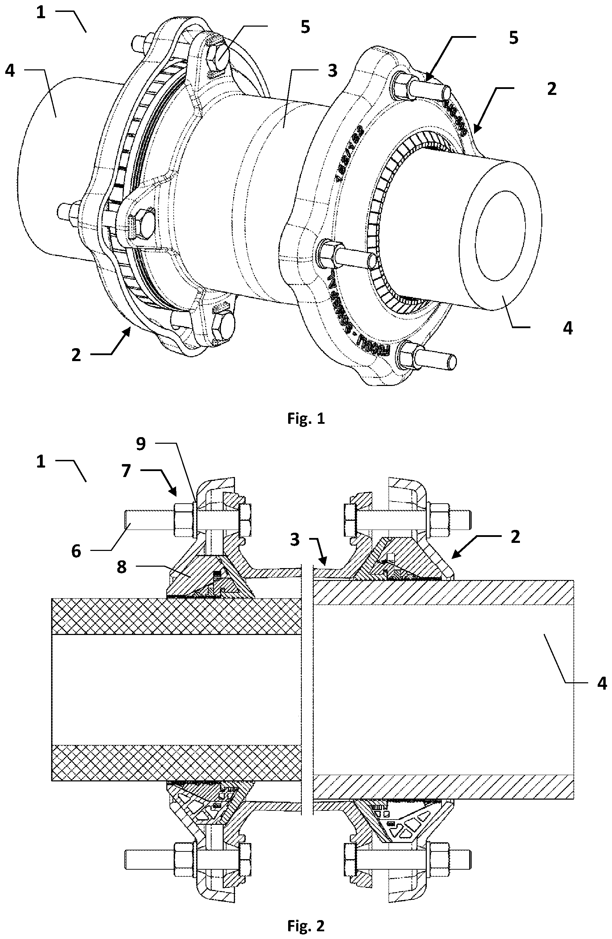

**Figure 1** illustrates an embodiment according to the present disclosure of a pipe coupling and restraining device that comprises: the pipe coupling and restraining device 1, a clamping ring 2, a coupling sleeve 3, the pipe or pipes to be coupled 4, bolts and nuts 5 for joining the sleeve and ring together.

**Figure 2** illustrates in cross-section an embodiment according to the present disclosure of a pipe coupling and restraining device that comprises: the pipe coupling and restraining device 1, clamping ring 2; coupling sleeve 3, bolt 6, nut 7, washer 9, collar assembly **8,** pipe **4.**

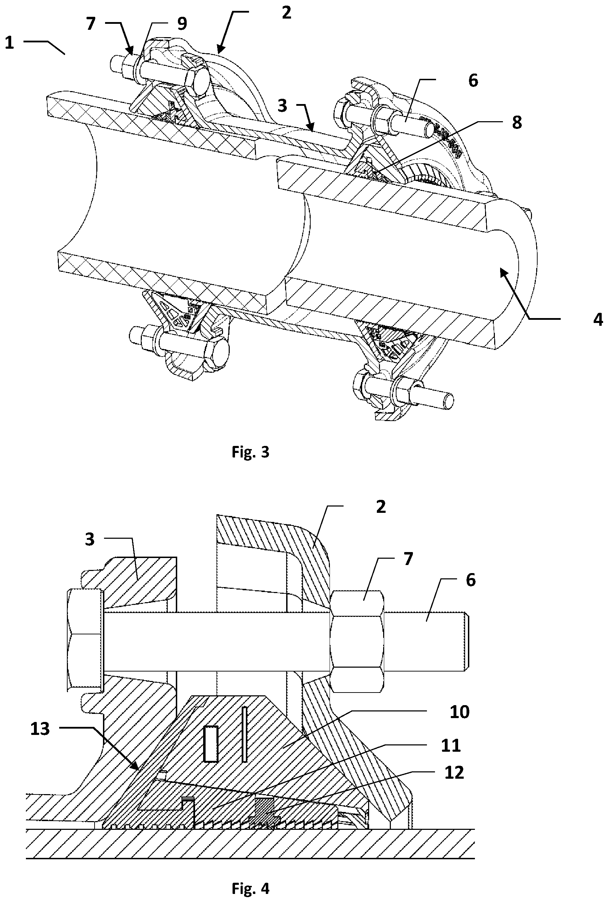

**Figure 3** illustrates in perspective an embodiment according to the present disclosure of a pipe coupling and restraining device that comprises: the pipe coupling and restraining device **1,** clamping ring **2;** coupling sleeve **3,** bolt **6,** nut **7,** washer **9,** collar assembly **8,** pipe **4.**

**Figure 4** illustrates in detail an embodiment according to the present disclosure of a pipe coupling and restraining device that comprises: clamping ring **2;** coupling sleeve **3,** bolt **6,** nut **7,** pipe **4,** support body **10,** gripper **11,** rivet **12** and annular seal **13.**

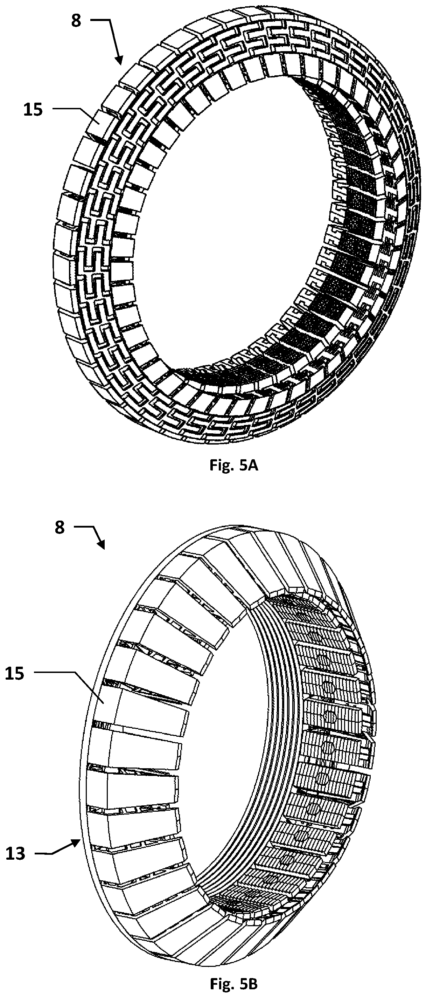

**Figure 5A** and **5B** illustrate in more detail an embodiment of the collar assembly, seen from two different sides, according to the present disclosure of a pipe coupling and restraining device that comprises collar assembly **8,** wedge-shaped segment **15** and annular seal **13** (only present in fig. 5B).

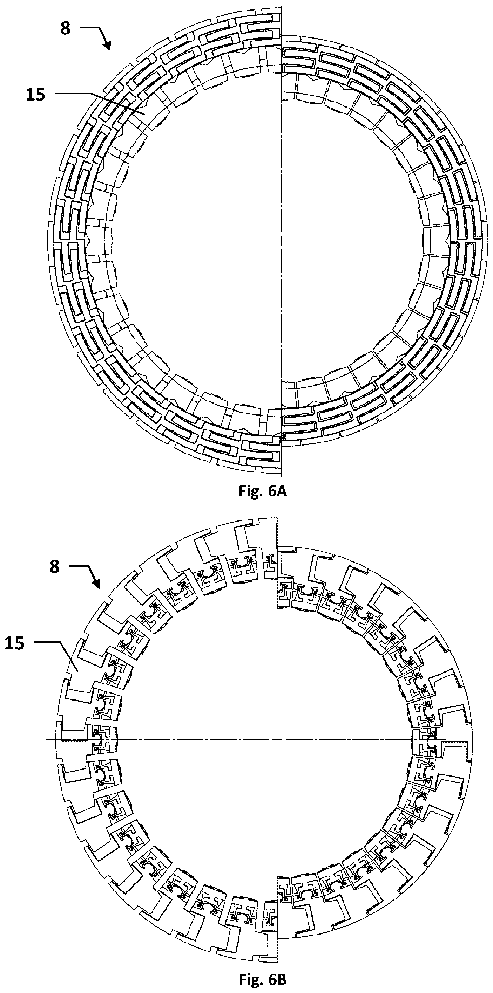

**Figures 6A** and **6B** illustrate in more detail an embodiment of the collar assembly according to the present disclosure of a pipe coupling and restraining device that comprises collar assembly **8** and wedge-shaped segment **15.** **Figure 6A** and **6B** illustrate the adaptability to different diameters by the pipe collar comprising the wedge-shaped segments, as required for different pipe diameters.

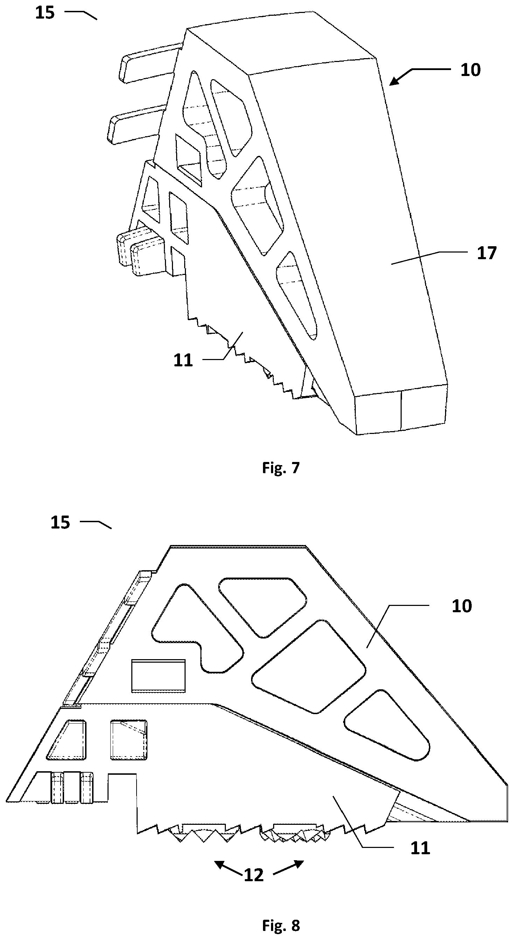

**Figure 7** illustrates in more detail another embodiment according to the present disclosure of the wedge-shaped segments **15** comprising: the support body **10,** an extension surface **17** and the gripper **11.**

**Figure 8** illustrates in more detail an embodiment according to the present disclosure of the wedge-shaped segments **15** comprising: the support body **10,** the gripper **11** and the rivets **12.**

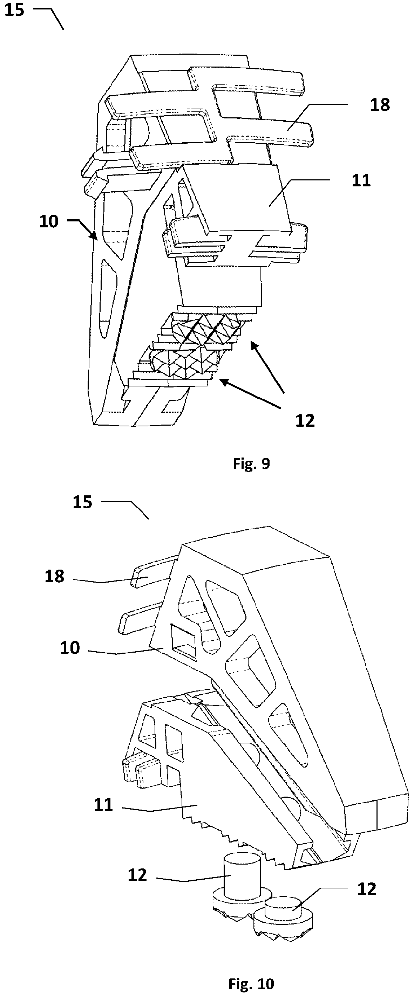

**Figure 9** illustrates in more detail an embodiment according to the present disclosure of the wedge-shaped segments 15 comprising the support body **10,** the gripper **11** and rivet **12.**

**Figure 10** illustrates in more detail an embodiment according to the present disclosure of the wedge-shaped segments **15** comprising the support body **10,** the gripper **11** and rivet **12.**

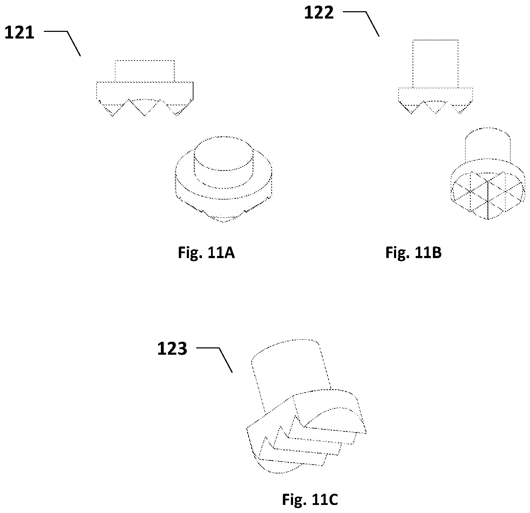

Different configurations of the rivet can be embedded in the gripper, as can be seen in **Figures 11A** (pointed rivet **121), 11B** (diamond-pattern knurled surface rivet **122)** and **11C** (rivet with a knurled surface with saw-toothed cross-section ridges **123).**

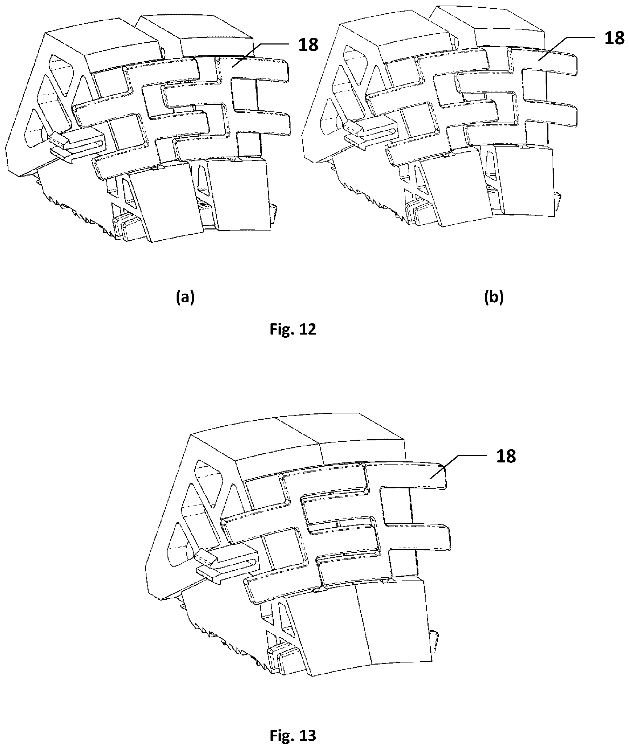

**Figures 12** shows two wedge-shaped segments for forming the pipe collar with interdigitated fingers **18** in different interlocking arrangements **12(a)** and **12(b)** where the diameter of the respective collar assemblies is similar but the respective angle formed between the two segments is dissimilar.

**Figure 13** shows two wedge-shaped segments fully coupled between each other.

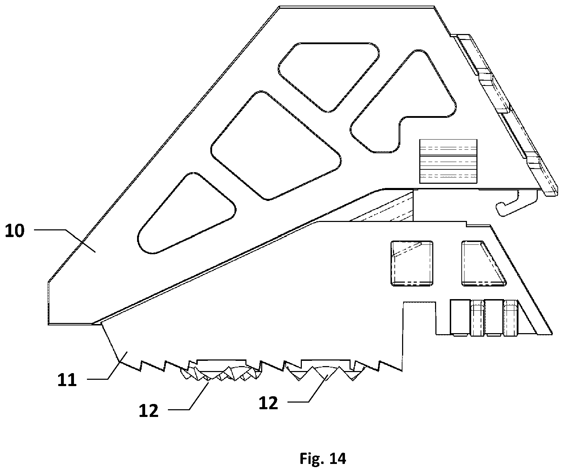

**Figures 14** shows the gripper **11** reacting to the axial movement of the pipe, sliding along the support body **10** and radially into the pipe for enhanced gripping effort.

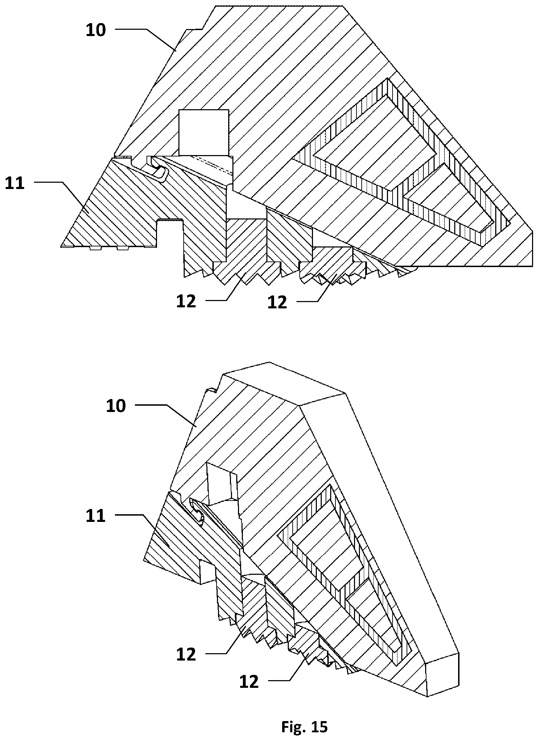

**Figure 15** shows the support body **10,** the gripper **11** and the rivet **12** according to another embodiment.

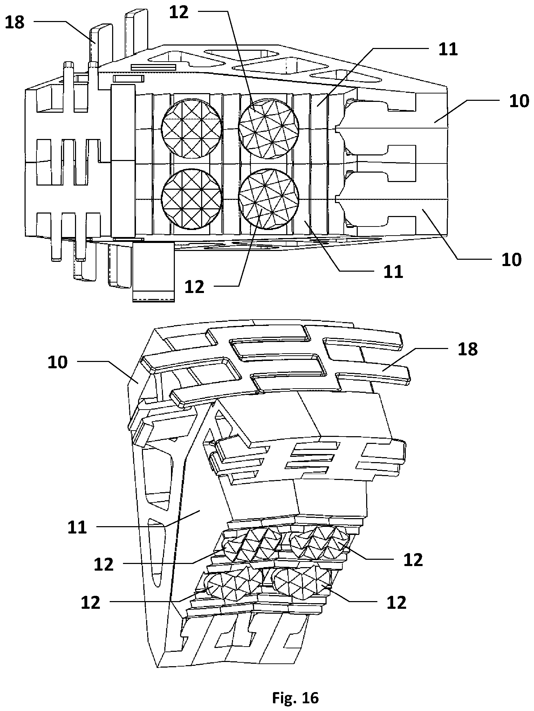

**Figure 16** shows two wedge-shaped segments coupled between each other.

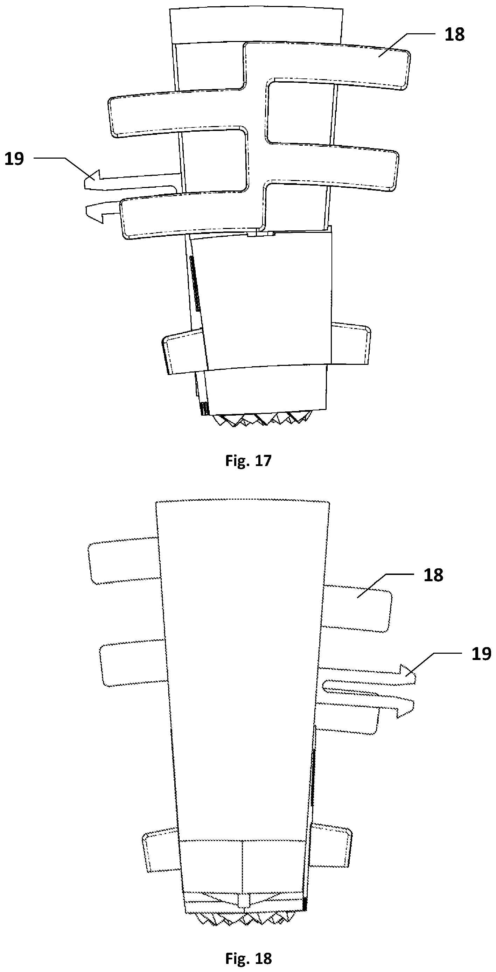

**Figure 17** and **18** represents the frontal view of the wedge-shaped segments and the back view of the wedge-shaped segments, respectively, according to another embodiment showing the interdigitated fingers **18** and snap-fit coupling **19** for coupling to a slot in a adjacent segment while allowing an adjustable gap between adjacent segments.

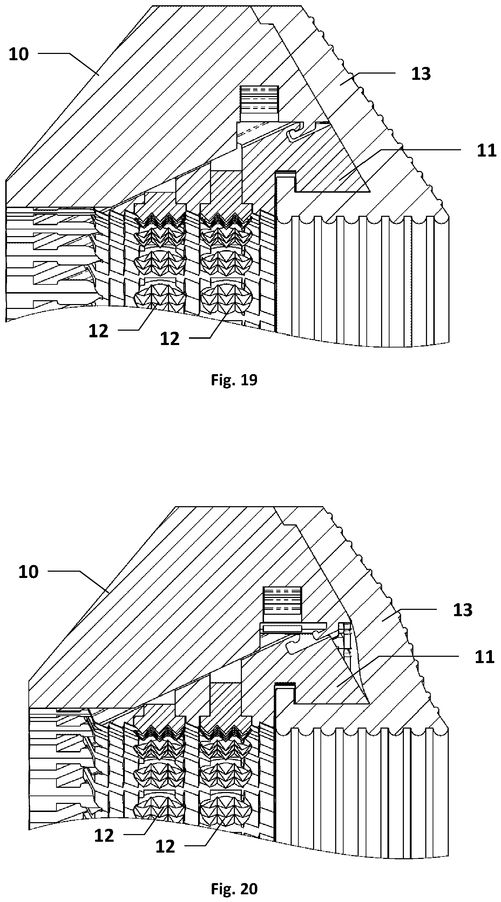

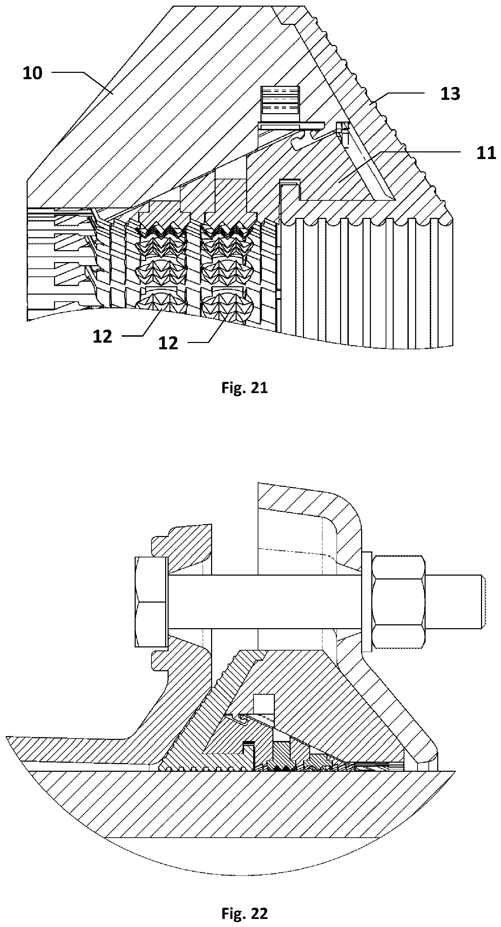

**Figures 19 to 21** show the annular seal **13** before, after and during stretching as the gripper **11** engages further into the pipe. As can be seen in **Fig. 20****,** after the stretching there is a deformation of the seal **13.** During the stretching **(****Fig. 21****),** the seal becomes stretched with some recesses. It can be seen that the seal becomes thinner in the inferior part as the gripper **11** extends the annular seal **13** along the tube. This improves sealing against the tube. Also, when transporting the pipe coupling and restraining device the annular seal **13** keeps the grippers **11** from falling off the device.

**Figure 22** represents a sectional view of an embodiment according to the present disclosure of a pipe coupling and restraining device mounted sealing and restraining a pipe, according to the disclosure.

## Claims

1. Pipe coupling and restraining device for connecting to a pipe, said pipe defining a longitudinal axis, comprising:
a coupling sleeve (3) for receiving an end of the pipe (4) to be restrained and
having a first annular abutment surface;
a clamping ring (2) having a second annular abutment surface;
a collar assembly (8) for restraining and sealing the pipe, comprising:
a pipe collar formed by wedge-shaped segments (15), each segment comprising a support body (10) and a gripper (11) arranged between the pipe and the support body, and an annular seal (13) for sealing the coupling sleeve to the pipe;
wherein the gripper (11) is slidably coupled to the support body for sliding forwardly and radially into the pipe for restraining the pipe when the pipe is pulled from the device;
wherein the support body (10) and gripper (11) are both arranged to support the annular seal (13) for sealing against the first annular abutment surface;
wherein the annular seal (13) is arranged to extend from the first annular abutment surface to the gap between grippers (11) and pipe (4);
wherein the first or the second annular abutment surfaces is conical such that when the coupling sleeve (3) and clamping ring (2) are axially compressed together, the collar assembly (8) is pressed inwardly into the pipe compressing the seal radially between collar assembly (8) and the pipe (4) and also axially between the collar assembly and the first annular abutment surface;
**characterised in that** the wedge-shaped segment (15) comprises interdigitated fingers (18) on a face of the support body (10) for meshing with corresponding interdigitated fingers of two neighbouring wedge-shaped segments (15) in order to support the annular seal as a circumferentially uninterrupted surface;
wherein the gripper (11) comprises extensions to radially compress the annular seal (13) against the pipe (4), wherein the extensions can be inserted into corresponding slots on a neighbouring gripper for forming the pipe collar.

2. Pipe coupling and restraining device according to the previous claim wherein the first and second annular abutment surfaces are both conical such that when the coupling sleeve (3) and clamping are axially compressed together, the collar assembly (8) is pressed inwardly into the pipe compressing the seal radially between collar assembly (8) and the pipe (4) and also axially between the collar assembly (8) and the first annular abutment surface.

3. Pipe coupling and restraining device according to any of the previous claims comprising at least one, in particular two, further in particular two, and only two, rivets (12, 121, 122, 123) embedded in the gripper (11) for improving the gripping of the pipe, preferably the rivet or rivets (12, 121, 122, 123) being knurled in straight ridges or diamond-shaped ridges for improving the gripping of the pipe.

4. Pipe coupling and restraining device according to any of the previous claims wherein the annular seal (13) comprises an annular lip for fitting into the gripper (11) and the gripper (11) comprises a recess for receiving and holding said annular lip.

5. Pipe coupling and restraining device according to any of the previous claims wherein the gripper (11) comprises snap-fit clips (19) for slidably coupling the gripper (11) to the support body (10) and/or the gripper (11) comprises a flat face towards the pipe which has been knurled to improve gripping of the pipe, in particular the flat face of the gripper (11) is straight knurled with ridges angled against the removal of the pipe from the device.

6. Pipe coupling and restraining device according to any of the previous claims wherein the support body (10) comprises a track for receiving the gripper (11) in sliding motion and the gripper (11) comprises clips for slidably coupling to the track, preferably the track comprises ribs placed to limit the sliding motion of the gripper.

7. Pipe coupling and restraining device according to claim 6 wherein the track and the gripper (11) are slidably coupled such that the gripper (11) is able to tilt around the longitudinal axis of the track to accommodate a pipe imperfection or misalignment.

8. Pipe coupling and restraining device according to any of the previous claims, wherein the gripper (11) is arranged to stretch the annular seal as the gripper slides onto the tube in order to increase sealing of the device around the pipe and/or the gripper (11) is arranged to stretch the annular seal (13) as the gripper slides onto the tube detaching the annular seal from the first abutment surface to protect the annular seal cornering between the first abutment surface and the pipe.

9. Pipe coupling and restraining device according to any of the previous claims wherein the support body (10) comprises a mid-body radial extension and a matching slot for receiving such a mid-body extension, on the opposite side of the support body, for guiding each support body (10) with the next, when forming the pipe collar.

10. Pipe coupling and restraining device according to any of the previous claims wherein the support body comprises a snap-fit clip and a respective slot for receiving such a snap-fit clip, on the opposite side of the support body, for coupling to another support body when forming the pipe collar.

11. Pipe coupling and restraining device according to any of the previous claims wherein the coupling sleeve (3) comprises bolt fixation tabs for supporting bolts or nuts for tightening the coupling sleeve and clamping ring (2) together, in particular the bolt fixation tabs comprising blocking protuberances for preventing bolt or nut rotation, more preferably the clamping ring (2) and coupling sleeve are arranged to receive nuts and bolts for fastening the clamping ring (2) and coupling sleeve (3) together wherein said bolts are circumferentially distributed.

12. Pipe coupling and restraining device according to any of the previous claims, wherein the clamping ring (2) and coupling sleeve (3) comprise perforated tabs arranged for receiving fastener nuts and bolts, preferably the clamping ring comprises four or more bolt fixation tabs, each tab radially distributed, each of the tabs being coplanar with the opposed tab of the sleeve, for receiving said nuts and bolts.

13. Gate valve, "T" socket, socket bend, or fixation flange comprising the coupling and restraining device of any of the previous claims.

## Patentansprüche

1. Rohrverbindungs- und Haltevorrichtung zur Verbindung mit einem Rohr, wobei das genannte Rohr eine Längsachse definiert, umfassend:
eine Kupplungsmuffe (3) zur Aufnahme eines Endes des zurückzuhaltenden Rohrs (4), die eine erste ringförmige Anlagefläche aufweist;
einen Klemmring (2) mit einer zweiten ringförmigen Anlagefläche;
eine Manschettenanordnung (8) zum Zurückhalten und Abdichten des Rohrs, umfassend:
eine aus keilförmigen Segmenten (15) gebildete Rohrmanschette, wobei jedes Segment einen Tragkörper (10) und einen zwischen dem Rohr und dem Tragkörper angeordnete Klemmbacke (11) umfasst, und eine ringförmige Dichtung (13) zum Abdichten der Kupplungsmuffe an dem Rohr;
wobei die Klemmbacke (11) verschiebbar mit dem Tragkörper gekoppelt ist, um nach vorne und radial in das Rohr zu gleiten, um das Rohr zurückzuhalten, wenn das Rohr aus der Vorrichtung gezogen wird;
wobei der Tragkörper (10) und die Klemmbacke (11) beide so angeordnet sind, dass sie die ringförmige Dichtung (13) zum Abdichten gegen die erste ringförmige Anlagefläche stützen;
wobei die ringförmige Dichtung (13) so angeordnet ist, dass sie sich von der ersten ringförmigen Anlagefläche bis zum Spalt zwischen den Klemmbacken (11) und dem Rohr (4) erstreckt;
wobei die erste oder die zweite ringförmige Anlagefläche konisch ist, so dass, wenn die Kupplungsmuffe (3) und der Klemmring (2) axial zusammengedrückt werden, die Manschettenanordnung (8) nach innen in das Rohr gedrückt wird, wobei die Dichtung radial zwischen der Manschettenanordnung (8) und dem Rohr (4) sowie axial zwischen der Manschettenanordnung und der ersten ringförmigen Anlagefläche zusammengedrückt wird;
**dadurch gekennzeichnet, dass** das keilförmige Segment (15) ineinandergreifende Finger (18) auf einer Fläche des Tragkörpers (10) zum Eingreifen mit entsprechenden ineinandergreifenden Fingern zweier benachbarter keilförmiger Segmente (15) umfasst, um die ringförmige Dichtung als eine in Umfangsrichtung ununterbrochene Fläche zu stützen;
wobei die Klemmbacke (11) Verlängerungen aufweist, um die ringförmige Dichtung (13) radial gegen das Rohr (4) zu drücken, wobei die Verlängerungen in entsprechende Schlitze an einer benachbarten Klemmbacke zur Bildung der Rohrmanschette eigeführt werden können.

2. Rohrverbindungs- und Haltevorrichtung nach dem vorangehenden Anspruch, wobei die erste und die zweite ringförmige Anlagefläche beide konisch sind, so dass, wenn die Kupplungsmuffe (3) und das Klemmelement axial zusammengedrückt werden, die Manschettenanordnung (8) nach innen in das Rohr gedrückt wird, wodurch die Dichtung radial zwischen der Manschettenanordnung (8) und dem Rohr (4) sowie axial zwischen der Manschettenanordnung (8) und der ersten ringförmigen Anlagefläche zusammengedrückt wird.

3. Rohrverbindungs- und Haltevorrichtung nach einem der vorangehenden Ansprüche, umfassend mindestens eine, insbesondere zwei, ferner insbesondere zwei und nur zwei, in die Klemmbacke (11) eingebettete Nieten (12, 121, 122, 123) zur Verbesserung der Griffigkeit des Rohrs, wobei die Niete oder Nieten (12, 121, 122, 123) bevorzugt in geraden Rillen oder diamantförmigen Rillen gerändelt sind, um die Griffigkeit des Rohrs zu verbessern.

4. Rohrverbindungs- und Haltevorrichtung nach einem der vorangehenden Ansprüche, wobei die ringförmige Dichtung (13) eine ringförmige Lippe zum Einpassen in die Klemmbacke (11) aufweist und die Klemmbacke (11) eine Aussparung zur Aufnahme und zum Halten der genannten ringförmigen Lippe aufweist.

5. Rohrverbindungs- und Haltevorrichtung nach einem der vorangehenden Ansprüche, wobei die Klemmbacke (11) eine Klammer mit Schnappverbindung (19) zum verschiebbaren Verbinden der Klemmbacke (11) mit dem Tragkörper (10) aufweist und/oder die Klemmbacke (11) eine flache, dem Rohr zugewandte Seite aufweist, die gerändelt ist, um die Griffigkeit des Rohres zu verbessern, wobei insbesondere die flache Seite der Klemmbacke (11) gerade gerändelt ist, mit Rippen, die gegen das Entfernen des Rohres von der Vorrichtung abgewinkelt sind.

6. Rohrverbindungs- und Haltevorrichtung nach einem der vorangehenden Ansprüche, wobei der Tragkörper (10) eine Schiene zur verschiebbaren Aufnahme der Klemmbacke (11) aufweist und die Klemmbacke (11) Clips zur verschiebbaren Verbindung mit der Schiene aufweist, wobei die Schiene bevorzugt Rippen aufweist, die so angeordnet sind, dass sie die Gleitbewegung der Klemmbacke begrenzen.

7. Rohrverbindungs- und Haltevorrichtung nach Anspruch 6, bei der die Schiene und die Klemmbacke (11) verschiebbar gekoppelt sind, so dass sich die Klemmbacke (11) um die Längsachse der Schiene neigen kann, um Unebenheiten auf dem Rohr oder Fehlausrichtung auszugleichen.

8. Rohrverbindungs- und Haltevorrichtung nach einem der vorangehenden Ansprüche, wobei die Klemmbacke (11) so angeordnet ist, dass sie die ringförmige Dichtung dehnt, wenn die Klemmbacke auf das Rohr gleitet, um die Abdichtung der Vorrichtung um das Rohr herum zu erhöhen, und/oder die Klemmbacke (11) so angeordnet ist, dass sie die ringförmige Dichtung (13) dehnt, wenn die Klemmbacke auf das Rohr gleitet, wobei sie die ringförmige Dichtung von der ersten Anlagefläche löst, um die ringförmige Dichtung vor dem Verkanten zwischen der ersten Anlagefläche und dem Rohr zu schützen.

9. Rohrverbindungs- und Haltevorrichtung nach einem der vorangehenden Ansprüche, wobei der Tragkörper (10) eine radiale Erweiterung des Mittelkörpers und einen passenden Schlitz zur Aufnahme einer solchen Erweiterung des Mittelkörpers auf der gegenüberliegenden Seite des Tragkörpers aufweist, um jeden Tragkörper (10) mit dem nächsten zu führen, wenn die Rohrmanschette gebildet wird.

10. Rohrverbindungs- und Haltevorrichtung nach einem der vorangehenden Ansprüche, wobei der Tragkörper eine Schnappverbindung und einen entsprechenden Schlitz zur Aufnahme einer solchen Schnappverbindung auf der gegenüberliegenden Seite des Tragkörpers zur Verbindung mit einem anderen Tragkörper bei der Bildung der Rohrmanschette aufweist.

11. Rohrverbindungs- und Haltevorrichtung nach einem der vorangehenden Ansprüche, wobei die Kupplungsmuffe (3) Fixierlaschen für die Aufnahme von Bolzen oder Muttern zum Zusammenziehen der Kupplungsmuffe und des Klemmrings (2) aufweist, wobei insbesondere die Fixierlaschen für die Bolzen Vorsprünge aufweisen, um ein Drehen der Bolzen oder Muttern zu verhindern, wobei besonders bevorzugt der Klemmring (2) und die Kupplungsmuffe so angeordnet sind, dass sie Muttern und Bolzen zum Befestigen des Klemmrings (2) und der Kupplungsmuffe (3) aneinander aufnehmen, wobei die Bolzen in Umfangsrichtung verteilt sind.

12. Rohrverbindungs- und Haltevorrichtung nach einem der vorangehenden Ansprüche, wobei der Klemmring (2) und die Kupplungsmuffe (3) perforierte Laschen aufweisen, die zur Aufnahme von Befestigungsmuttern und -bolzen angeordnet sind, wobei der Klemmring bevorzugt vier oder mehr Fixierlaschen für Bolzen aufweist, wobei jede Lasche radial verteilt ist und wobei jede der Laschen koplanar mit der gegenüberliegenden Lasche der Muffe ist, um die Muttern und Bolzen aufzunehmen.

13. Absperrschieber, T-Muffe, Muffenkrümmer oder Befestigungsflansch mit der Rohrverbindungs- und Haltevorrichtung nach einem der vorangehenden Ansprüche.

## Revendications

1. Dispositif de raccord et de retenue de tuyau destiné à être raccordé à un tuyau, ledit tuyau définissant un axe longitudinal, comprenant :
un manchon de raccord (3) destiné à recevoir une extrémité du tuyau (4) devant être retenu et ayant une première surface de butée annulaire ;
une bague de serrage (2) ayant une seconde surface de butée annulaire ;
un ensemble pour collier (8) pour retenir et sceller le tuyau, comprenant :
un collier de tuyau formé par des segments en forme de coin (15), chaque segment comprenant un corps de support (10) et un préhenseur (11) arrangé entre le tuyau et le corps de support, et un joint annulaire (13) pour sceller le manchon de raccord au tuyau ;
dans lequel le préhenseur (11) est accouplé de manière coulissante au corps de support pour coulisser vers l'avant et radialement vers l'intérieur du tuyau pour retenir le tuyau lorsque le tuyau est retiré du dispositif;
dans lequel le corps de support (10) et le préhenseur (11) sont tous deux arrangés pour soutenir le joint annulaire (13) pour le sceller contre la première surface de butée annulaire ;
dans lequel le joint annulaire (13) est arrangé pour s'étendre de la première surface de butée annulaire à l'écart entre les préhenseurs (11) et le tuyau (4) ;
dans lequel la première ou la seconde surface de butée annulaire est conique telle que lorsque le manchon de raccord (3) et la bague de serrage (2) sont axialement comprimés ensembles, l'ensemble pour collier (8) soit pressé vers l'intérieur du tuyau comprimant le joint radialement entre l'ensemble pour collier (8) et le tuyau (4) et également axialement entre l'ensemble pour collier et la première surface de butée annulaire ;
**caractérisé en ce que**
le segment en forme de coin (15) comprend des doigts interdigités (18) sur une face du corps de support (10) destinés à s'engrener avec les doigts interdigités correspondants de deux segments en forme de coin voisins (15) afin de soutenir le joint annulaire en tant que surface circonférentiellement ininterrompue ;
dans lequel le préhenseur (11) comprend des extensions pour comprimer radialement le joint annulaire (13) contre le tuyau (4), dans lequel les extensions peuvent être insérées dans les fentes correspondantes sur un préhenseur voisin pour former le collier de tuyau.

2. Dispositif de raccord et de retenue de tuyau selon la revendication précédente dans lequel la première et la seconde surface de butée annulaire sont toutes deux coniques telles que lorsque le manchon de raccord (3) et la bague de serrage sont axialement comprimés ensembles, l'ensemble pour collier (8) soit pressé vers l'intérieur du tuyau comprimant le joint radialement entre l'ensemble pour collier (8) et le tuyau (4) ainsi que axialement entre l'ensemble pour collier (8) et la première surface de butée annulaire.

3. Dispositif de raccord et de retenue de tuyau selon l'une quelconque des revendications précédentes comprenant au moins un, particulièrement deux, plus particulièrement deux, et seulement deux, rivets (12, 121, 122, 123) intégrés dans le préhenseur (11) pour améliorer la prise du tuyau, le rivet ou les rivets (12, 121, 122, 123) étant préférablement moletés en stries droites ou en stries en forme de diamant pour améliorer la prise du tuyau.

4. Dispositif de raccord et de retenue de tuyau selon l'une quelconque des revendications précédentes dans lequel le joint annulaire (13) comprend une lèvre annulaire destinée à être fixée au préhenseur (11) et le préhenseur (11) comprend un renfoncement pour recevoir et retenir ladite lèvre annulaire.

5. Dispositif de raccord et de retenue de tuyau selon l'une quelconque des revendications précédentes dans lequel le préhenseur (11) comprend des attaches « snap-fit » (19) destinées à raccorder de manière coulissante le préhenseur (11) au corps de support (10) et/ou le préhenseur (11) comprend une face plate vers le tuyau qui a été moletée pour améliorer la prise du tuyau, la face plate du préhenseur (11) étant particulièrement droite moletée avec des stries inclinées contre le retrait du tuyau du dispositif.

6. Dispositif de raccord et de retenue de tuyau selon l'une quelconque des revendications précédentes dans lequel le corps de support (10) comprend un rail pour recevoir le préhenseur (11) en un mouvement coulissant et le préhenseur (11) comprend des attaches pour être raccordé de manière coulissante au rail, le rail comprenant préférablement des nervures placées de manière à limiter le mouvement coulissant du préhenseur.

7. Dispositif de raccord et de retenue de tuyau selon la revendication 6 dans lequel le rail et le préhenseur (11) sont raccordés de manière coulissante tel que le préhenseur (11) puisse s'incliner autour de l'axe longitudinal du rail pour recevoir une imperfection ou un désalignement de tuyau.

8. Dispositif de raccord et de retenue de tuyau selon l'une quelconque des revendications précédentes, dans lequel le préhenseur (11) est arrangé pour étirer le joint annulaire pendant que le préhenseur coulisse sur le tube afin d'augmenter le scellage du dispositif autour du tuyau et/ou le préhenseur (11) est arrangé pour étirer le joint annulaire (13) pendant que le préhenseur coulisse sur le tube détachant le joint annulaire de la première surface de butée pour protéger le joint annulaire en angle entre la première surface de butée et le tuyau.

9. Dispositif de raccord et de retenue de tuyau selon l'une quelconque des revendications précédentes, dans lequel le corps de support (10) comprend une extension radiale au milieu du corps et une rainure respective pour recevoir ladite extension du milieu du corps, sur le côté opposé du corps de support, pour guider chaque corps de support (10) avec le suivant, lors de la formation du collier de tuyau.

10. Dispositif de raccord et de retenue de tuyau selon l'une quelconque des revendications précédentes, dans lequel le corps de support comprend une attache « snap-fit » et une rainure respective pour recevoir cette attache « snap-fit », sur le côté opposé du corps de support, destinée à être raccordée à un autre corps de support lors de la formation du collier de tuyau.

11. Dispositif de raccord et de retenue de tuyau selon l'une quelconque des revendications précédentes, dans lequel le manchon de raccord (3) comprend des onglets de fixation de boulons pour soutenir des boulons ou écrous pour serrer le manchon de raccord et la bague de serrage (2) ensembles, les onglets de fixation de boulons comprenant en particulier des protubérances de blocage pour éviter la rotation du boulon ou écrou, la bague de serrage (2) et le manchon de raccord étant plus préférablement arrangés pour recevoir des écrous et boulons pour attacher la bague de serrage (2) et le manchon de raccord (3) ensembles dans lequel lesdits boulons sont distribués de manière circonférentielle.

12. Dispositif de raccord et de retenue de tuyau selon l'une quelconque des revendications précédentes dans lequel la bague de serrage (2) et le manchon de raccord (3) comprennent des onglets perforés arrangés pour recevoir des écrous et boulons de fixation, la bague de serrage comprenant préférablement quatre ou plus d'onglets de fixation de boulons, chaque onglet étant distribué radialement, chacun des onglets étant coplanaire avec l'onglet opposé du manchon, pour recevoir lesdits écrous et boulons.

13. Robinet-vanne, clé à douille en T, genou pour clé à douille, ou bride de fixation comprenant le dispositif de raccord et de retenue de l'une quelconque des revendications précédentes.
